# EUROPEAN PATENT APPLICATION

(11) **EP 4 406 832 A1**
(43) Date of publication of application: **31.07.2024**
(21) Application number: 23275015.8
(22) Date of filing: 25.01.2023
(51) Int. Cl.: B64C 13/04, B64C 13/12, B64D 43/00, B64C 13/06

(54) **ACTIVE THROTTLE ARRANGEMENT AND CONTROL SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Described herein is a method of controlling a multi-quadrant active throttle assembly. The method comprises: receiving force and position data for a plurality of levers in the multi-quadrant active throttle assembly; analysing the force and position data to determine whether a threshold is exceeded; in response to determining that the threshold is not exceeded, operating in a first mode of operation in which the plurality of levers are controlled collectively; and in response to determining that the threshold is exceeded, operating in a different mode of operation in which the plurality of levers are not controlled collectively.

## Description

### FIELD

The present invention relates to active throttles for vehicles and in particular, aircraft (e.g. rotary, fixed or blend).

### BACKGROUND

With the advent of fly by wire technologies, the direct mechanical connection between the throttle of an aircraft and the engines was replaced by an electrical connection, with the engines being controlled based on a sensed position (e.g. angular position) of the throttle (e.g. of the throttle lever). This change from a mechanical connection to an electrical connection resulted in the loss of any haptic feedback to the pilot about the aircraft's current state of operation. Active throttles have been developed to provide this haptic feedback to the pilot. An active throttle assembly includes one or more actuators which can be driven by a control signal (e.g. based on actual aircraft conditions) to provide haptic feedback to the pilot.

### SUMMARY

According to an aspect of the present invention, there is provided a method of controlling a multi-quadrant active throttle assembly, the method comprising: receiving force and position data for a plurality of levers in the multi-quadrant active throttle assembly; analysing the force and position data to determine whether a threshold is exceeded; in response to determining that the threshold is not exceeded, operating in a first mode of operation in which the plurality of levers are controlled collectively; and in response to determining that the threshold is exceeded, operating in a different mode of operation in which the plurality of levers are not controlled collectively. The method improves the fidelity of the system and the visual feedback to the pilot.

Analysing the force and position data to determine whether a threshold is exceeded may comprise: analysing the force and position data to determine whether any force data exceeds a force threshold and whether the position data indicates a position deviation between any two of the plurality of levers that exceeds a position threshold; wherein determining that the threshold is not exceeded comprises : determining that none of the force data exceeds the force threshold and that the position data does not indicate a position deviation that exceeds the position threshold ; and wherein determining that the threshold is exceeded comprises : determining that any of the force data exceeds the force threshold or that the position data indicates a position deviation between two of the plurality of levers that exceeds the position threshold.

The threshold may be an acceleration threshold or a velocity threshold.

Operating in the first mode of operation may comprise: outputting control data to the multi-quadrant active throttle assembly, wherein the control data is configured to cause the plurality of levers to move to remain aligned.

Operating in the first mode of operation may comprise: updating a combined model for the plurality of levers based on motion of the plurality of levers, wherein the combined model is used to generate control data to provide haptic feedback via the plurality of levers.

The different mode of operation may comprise a second mode of operation in which each the plurality of levers are controlled independently.

Operating in the second mode of operation may comprise: outputting control data to the multi-quadrant active throttle assembly, the control data comprising independent control data for each of the plurality of levers.

Operating in the second mode of operation may comprise: updating individual models for each of the plurality of levers based on motion of the respective lever, wherein the model for a lever is used to generate control data to provide haptic feedback via the respective lever.

The different mode of operation may comprise a third mode of operation in which a first subset of the plurality of levers are controlled independently of a second subset of the plurality of levers and within each subset, the levers are controlled collectively, wherein the first and second subsets do not overlap and the second subset comprises at least two levers.

Operating in the third mode of operation may comprise: outputting control data to the multi-quadrant active throttle assembly, wherein the control data is configured to cause the levers in the second subset to move to remain aligned.

Operating in the third mode of operation may comprise: updating a model for the first subset of levers based on motion of the plurality of levers in the first subset and updating a model for the second subset of levers based on motion of the plurality of levers in the second subset, wherein the model for the first subset of levers is used to generate control data to provide haptic feedback via the first subset of levers and the model for the second subset of levers is used to generate control data to provide haptic feedback via the second subset of levers.

According to a further aspect of the present invention, there is provided a control system for a multi-quadrant active throttle assembly, the control system comprising : an input interface configured to receive force and position data for a plurality of levers in the multi-quadrant active throttle assembly ; an output interface configured to output control data to the multi-quadrant active throttle assembly ; a processor; and a memory arranged to store computer executable instructions that, when executed cause the processor to: analyse the force and position data to determine whether a threshold is exceeded; in response to determining the threshold is not exceeded, operate in a first mode of operation in which the plurality of levers are controlled collectively; and in response to determining that the threshold is exceeded, operate in a different mode of operation in which the plurality of levers are not controlled collectively.

Analysing the force and position data to determine whether a threshold is exceeded may comprise : analysing the force and position data to determine whether any force data exceeds a force threshold and whether the position data indicates a position deviation between any two of the plurality of levers that exceeds a position threshold; wherein determining that the threshold is not exceeded comprises : determining that none of the force data exceeds the force threshold and that the position data does not indicate a position deviation that exceeds the position threshold ; and wherein determining that the threshold is exceeded comprises : determining that any of the force data exceeds the force threshold or that the position data indicates a position deviation between two of the plurality of levers that exceeds the position threshold.

The threshold may be an acceleration threshold or a velocity threshold.

Operating in the first mode of operation may comprise: outputting control data to the multi-quadrant active throttle assembly via the output interface, wherein the control data is configured to cause the plurality of levers to move to remain aligned.

The memory may be further arranged to store a plurality of lever models and wherein operating in the first mode of operation comprises: updating a combined model for the plurality of levers based on motion of the plurality of levers, wherein the combined model is used to generate control data to provide haptic feedback via the plurality of levers.

The different mode of operation may comprise a second mode of operation in which each the plurality of levers are controlled independently.

Operating in the second mode of operation may comprise: outputting control data to the multi-quadrant active throttle assembly via the output interface, the control data comprising independent control data for each of the plurality of levers.

Operating in the second mode of operation may comprise: updating individual models for each of the plurality of levers based on motion of the respective lever, wherein the model for a lever is used to generate control data to provide haptic feedback via the respective lever and wherein the models are stored in the memory.

The different mode of operation may comprise a third mode of operation in which a first subset of the plurality of levers are controlled independently of a second subset of the plurality of levers and within each subset, the levers are controlled collectively, wherein the first and second subsets do not overlap and the second subset comprises at least two levers.

Operating in the third mode of operation may comprise: outputting control data to the multi-quadrant active throttle assembly via the output interface, wherein the control data is configured to cause the levers in the second subset to move to remain aligned.

Operating in the third mode of operation may comprise: updating a model for the first subset of levers based on motion of the plurality of levers in the first subset and updating a model for the second subset of levers based on motion of the plurality of levers in the second subset, wherein the model for the first subset of levers is used to generate control data to provide haptic feedback via the first subset of levers and the model for the second subset of levers is used to generate control data to provide haptic feedback via the second subset of levers and wherein the models are stored in the memory.

According to another aspect of the present invention, there is provided a computer program comprising instructions which, when the program is executed by a computer, cause the computer to carry out any of the methods described herein. The computer program may be stored on a computer-readable medium.

### BRIEF DESCRIPTION OF THE FIGURES

Embodiments of the invention will now be described by way of example only with reference to the figures, in which:
Figure 1 is a schematic diagram of a first example aircraft system;
Figure 2 is a schematic diagram of a second example aircraft system;
Figures 3-10 are schematic diagrams of different active throttle assembly arrangements;
Figures 11-12 show two example methods of controlling a multi-quadrant active throttle assembly;
Figure 13 shows a graphical representation of the grouping of levers in different modes of operation according to the method of Figure 12; and
Figure 14 is a schematic diagram of a computing device 1400 that is configured to implement the methods of controlling a multi-quadrant active throttle assembly as shown in Figures 11 and 12.

### DETAILED DESCRIPTION

As described above, active throttles have been developed to provide haptic feedback to the pilot. This active feedback may be indicative of actual aircraft conditions but also may provide other feedback to pilots, e.g. in the form of soft stops (e.g. so that the pilot has to exert additional force to override a soft stop), gradients, gates, etc. Active throttles differ from auto-throttles (also referred to as back-driven throttles) which include an actuator but only provide simple feedback of the current throttle setting, e.g. by moving the throttle to reflect operation of the auto-pilot when engaged.

Described herein are a plurality of active throttle assembly arrangements that are configured to more accurately and/or reliably sense the force applied by a pilot to a throttle through the selection of sensor type (e.g. force or torque sensor) and/or positioning of the sensor. In various examples described herein, the length of any dynamic wires that connect to the force / torque sensor is reduced or the use of a dynamic wire is avoided, thereby improving the overall reliability of the active throttle assembly. In various examples described herein, the overall part count is reduced which in turn reduces the manufacturing complexity and may also reduce the overall weight of the assembly. The active throttle assembly arrangements described herein may be used in a single-quadrant (i.e. single throttle lever) active throttle assembly or in a multi-quadrant active throttle assembly (i.e. comprising multiple throttle levers).

Also described herein is a control system for a multi-quadrant active throttle assembly that improves the fidelity of the system and the visual feedback to the pilot. This control system may be used in combination with any of the plurality of active throttle assembly arrangements described herein or may be used independently (e.g. with any other multi-quadrant active throttle assembly).

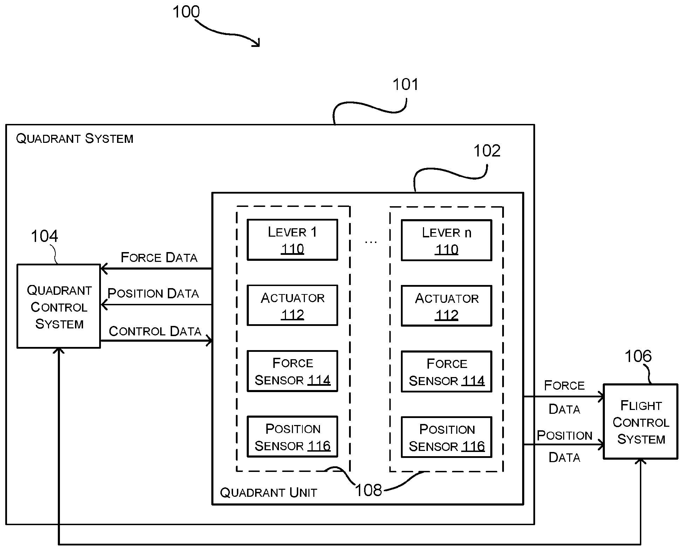

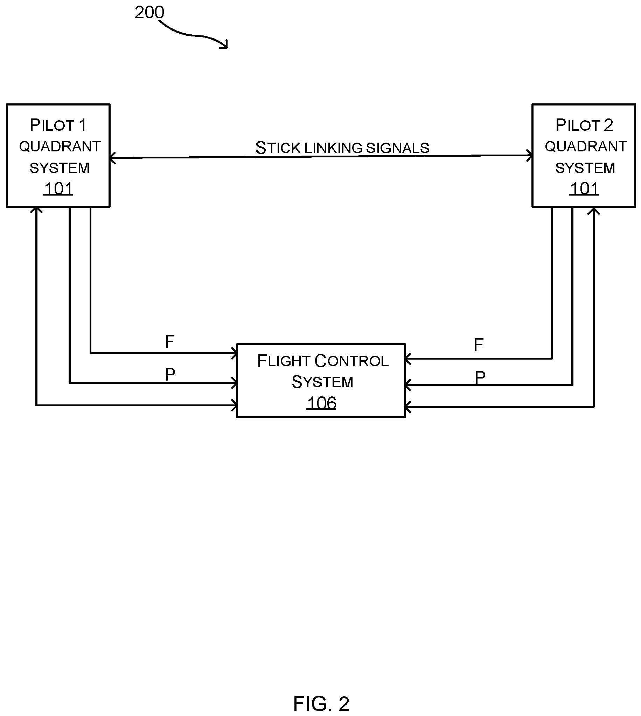

The active throttle assembly arrangements and the control system described herein may be used for single / independent pilot operation (e.g. as shown in the example system of Figure 1) and also in systems where the controls of the pilot and co-pilot are linked, e.g. systems where movement of the throttle by the pilot results in the co-pilot's throttle moving so that the throttle quadrants (i.e. levers) are at the same position (e.g. at the same angular position) for both the pilot and the co-pilot (e.g. as shown in the example system of Figure 2).

Figure 1 is a schematic diagram of a system 100 comprising quadrant system 101 (comprising a quadrant unit 102 and a quadrant control system 104) and a flight control system 104. It will be appreciated that the system 100 shown in Figure 1 only shows a part of an overall aircraft system. Furthermore, it will be appreciated that whilst Figure 1 shows a single flight control system 106, there may be more than one (e.g. for redundancy). The quadrant unit 102, which may also be referred to as a throttle unit, comprises one or more active throttle assemblies 108 (e.g. n active throttle assemblies, where n is an integer greater than or equal to one), one for each throttle lever. Each active throttle assembly 108 comprises a lever (also referred to as a quadrant or quadrant lever or throttle or thrust lever) 110, an actuator 112, a force or torque sensor 114 and a position sensor 116. It will be appreciated that an active throttle assembly 108 may comprise other elements in addition to those shown in Figure 1 and whilst each active throttle assembly 108 is shown as comprising a single actuator 112, a single force / torque sensor 114 and a single position sensor 116, it will be appreciated that there may one or more of each (e.g. to provide redundancy in the case of failure of one of these elements). The force / torque sensor 114 is arranged to detect force / torque applied to the lever and the position sensor 116 is arranged to detect the position (e.g. the angular position) of the lever.

The actuator 112 may comprise any combination of: DC motor, brushless DC motor, servo actuator, linear motor, planetary gearbox, harmonic drive gearbox, multi-phase resolver, Hall effect sensor, etc. Where the sensor 114 is a rotary torque sensor this may, for example, use strain gauges, linear or rotary variable differential transformers (LVDTs or RVDTs), ultrasound sensors, optical sensors, force sense resistors, magnetostrictive sensors, capacitive sensors, inductive sensors, piezoelectric sensors, etc. or any linear or inline axial combination thereof.

As shown in Figure 1, the quadrant unit 102 outputs force (or torque) and position data (for each of the active throttle assemblies) to both the quadrant control system 104 and the flight control system 106. The flight control system 106 uses these inputs (along with other inputs in some implementations) to control the aircraft engines (not shown in Figure 1). The quadrant control system 104 uses these inputs to control the actuators 112 (e.g. to determine what haptic feedback to provide via each lever 110) and outputs control data to the quadrant unit 102 which provides control signals for each of the actuators 112. As shown in Figure 1, the quadrant control system 104 may also communicate with the flight control system 106, e.g. to receive additional data (e.g. control characteristic data) that is then used to determine the haptic feedback required and hence generate the control data that is output to the quadrant unit 102 to control the actuators 112. As described in more detail below, haptic feedback models may be stored and used to determine the control signals to generate based on the inputs received by the quadrant control system 104. The control characteristic data that is received from the flight control system 106 may, for example, define aspects of the model that the lever is following (e.g. one or more of: positions of stops, forces required to overcome any stops, spring gradients, damping terms, etc.).

The system 100 of Figure 1 comprises only a single quadrant system 1010 (and hence a single quadrant unit 102). This may, for example, be used in a single pilot aircraft or it may be positioned within the cockpit between the pilot and co-pilot so that both the pilot and the co-pilot can reach and operate the levers 110 of the active throttle assemblies 108. Figure 2 shows an alternative system 200 which comprises separate quadrant systems 101 for each of the pilot and the co-pilot (labelled pilot 1 and pilot 2 quadrant systems in this example). The quadrant units 102 within each of these quadrant systems 101 may be positioned in outboard locations within the cockpit (e.g. as described in US 11,167,837 and shown in FIGs. 1, 2, 4 and 5 of that US patent). Each of the quadrant systems 101 provides force and position data to the flight control system 106 (or to each of the flight control systems 106 where there are more than one).

In this system 200, the two quadrant systems 101 are linked. In the example shown in Figure 2 they are linked electrically, rather than mechanically, with stick linking signals being communicated between the quadrant systems 101. These stick linking signals provide control data that keeps the positions of the corresponding levers 110 in each of the two quadrant units 102 aligned (it keeps lever 1 in the quadrant unit in pilot 1 quadrant system aligned with lever 1 in the quadrant unit in pilot 2 quadrant system, lever 2 in the quadrant unit in pilot 1 quadrant system aligned with lever 2 in the quadrant unit in pilot 2 quadrant system, etc). In other examples, the two quadrant systems 101 may be linked mechanically.

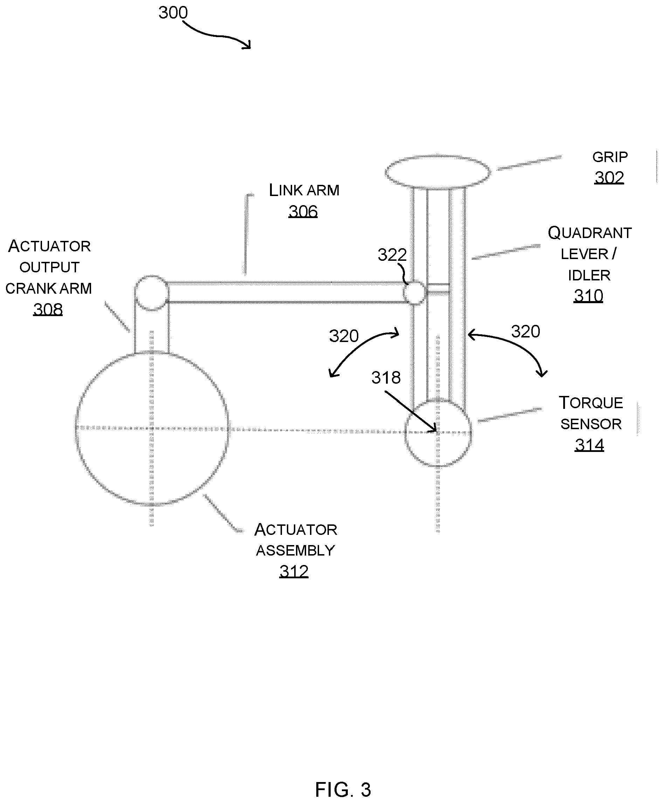

Figures 3-10 show seven different active throttle assembly arrangements, each of which may be implemented as the active throttle assembly 108 in either of the systems described above and shown in Figures 1 and 2. Each of these active throttle assembly arrangements improve the accuracy and/or reliability of the detection of the force applied by the pilot to the lever compared to existing active throttle assemblies. Whilst Figures 3-10 each show a single active throttle assembly, multiple assemblies (e.g. multiple identical assemblies) may be implemented within a quadrant unit (e.g. as in Figure 1). The active throttle assembly arrangements shown Figures 3-10 may comprise other elements that are not shown in the drawings, for example, a position sensor 116, additional actuators, etc.

In the active throttle assembly arrangements shown in Figures 3-10, the force / torque sensor (which corresponds to the force sensor 114 in Figure 1) is positioned close to the point where the pilot applies force in order to more accurately detect the force applied. The point at which force is applied by the pilot is the grip, which provides a grippable, shaped element (e.g. in the form of a plate or knob) at the distal end of the lever 110. As described above, this force may be detected using a force sensor or a torque sensor (since the lever 110 is mounted on a pivot such that it rotates about its proximal end). Each additional link or bearing between the point at which force is applied by the pilot and the point at which the force is sensed introduces errors (e.g. as a consequence of backlash and/or friction of the link or bearing) which reduce the accuracy of the force data provided to both the quadrant control system 104 and the flight control system 106 and these errors are then accommodated and/or corrected for in the respective control systems.

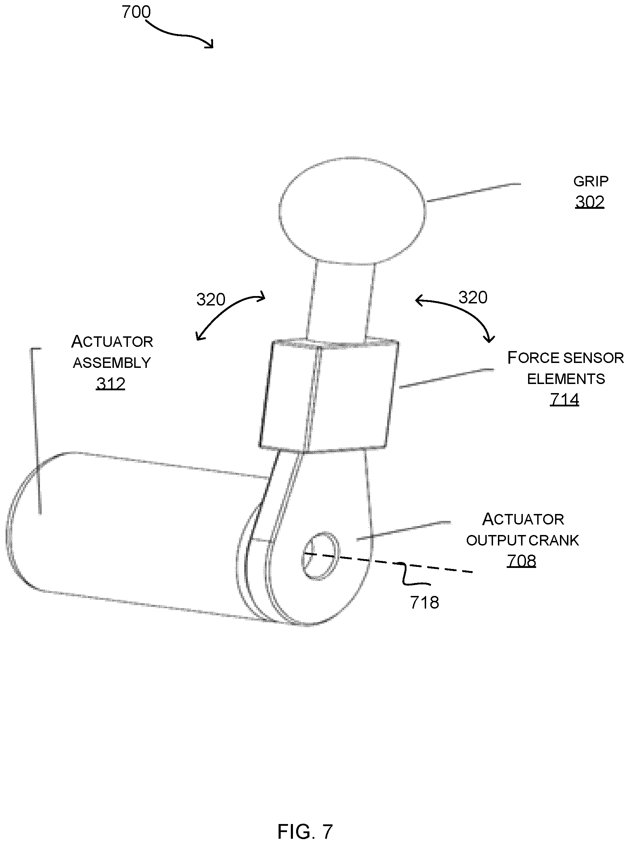

In the arrangements shown in Figures 3-6, a grip 302 is provided at a distal end of the quadrant lever / idler 310 (which corresponds to the lever 110 in Figure 1). In use, a pilot applies force to the grip 302 (and hence to the quadrant lever / idler 310) in order to rotate the quadrant lever / idler 310 (as indicated by the double ended arrows 320) about a first pivot 318 to adjust the aircraft throttle. Similarly, in the arrangements shown in Figures 7-10, a grip 302, 902 is provided at a distal end of the lever. In use, a pilot applies force to the grip 302, 902 (and hence to the lever) in order to rotate the lever (as indicated by the double ended arrows 320) about a first pivot 718, 926 to adjust the aircraft throttle. Whilst some of the arrangements in Figures 3-10 show a pair of elements - a lever and an idler - other arrangements show a single lever. It will be appreciated that any of the arrangements may be implemented either using a lever / idler arrangement or a single lever without an idler.

In the first arrangement 300 shown in Figure 3, the first pivot 318 is implemented using a torque sensor 314. The actuator assembly 312 (which corresponds to actuator 112 in Figure 1) is connected to the quadrant lever / idler 310 by means of a link arm 306. The link arm 306 connects, at a first end, to an actuator output crank arm 308, which is itself connected to the actuator assembly 312, and at a second end to the quadrant lever / idler 310 by means of a second pivot joint 322. In this first arrangement 300, a bearing which would conventionally provide the first pivot 318 is replaced by the torque sensor 314 which provides the force data for output to the quadrant control system 104. This reduces the part count (compared to having both a bearing and force/torque sensor) and as a result simplifies manufacturing and reduces overall weight of the assembly. Additionally, by having the torque sensor 314 functioning as the pivot point, the wires that connect to the torque sensor 314 will only move by a small rotation instead of large linear distances (as would be the case if the wires were connected far from the pivot 318, given the large range of rotational movement of the lever), thereby reducing the operational stress on the wires and improving their reliability.

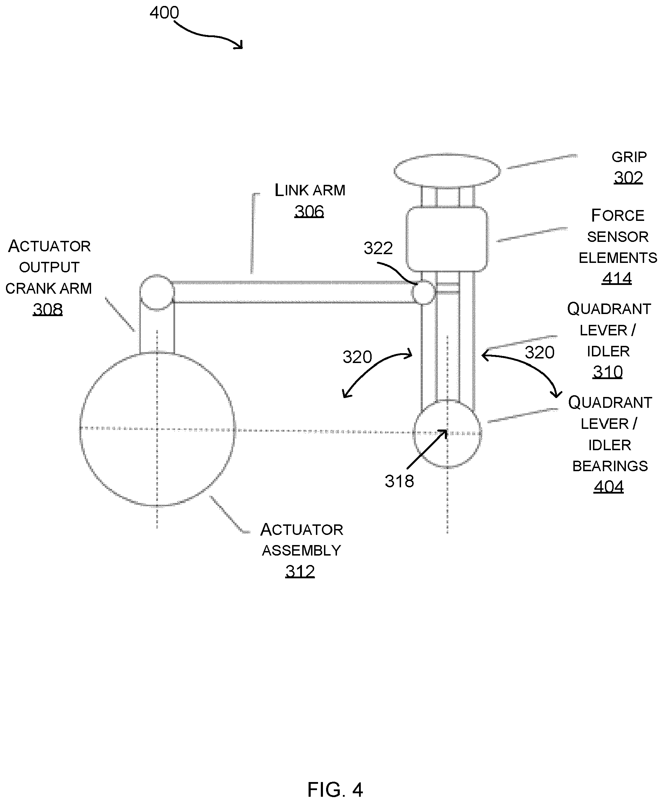

In the second arrangement 400 shown in Figure 4, the first pivot 318 is implemented using a bearing 404. Like the first arrangement, the actuator assembly 312 (which corresponds to actuator 112 in Figure 1) is connected to the quadrant lever / idler 310 by means of a link arm 306. The link arm 306 connects, at a first end, to an actuator output crank arm 308, which is itself connected to the actuator assembly 312, and at a second end to the quadrant lever / idler 310 by means of a second pivot joint 322. In this second arrangement, a force sensor 414 is positioned between the grip 302 and the second pivot joint 322. In this position the force sensor 414 detects the shear or bending load between the grip 302 and the pivot 322 rather than the compression / tension acting along the axis of the quadrant lever / idler 310 (and hence may be referred to as being a shear force sensor rather than a tensile force sensor). In this second arrangement 400, the force sensor 414 is placed as close to the grip 302 as possible and there are no bearings or links between the grip 302 and the force sensor 414. This reduces the error in the sensed force and hence reduces the error in the force data that is output to both the quadrant control system 104 and the flight control system 106.

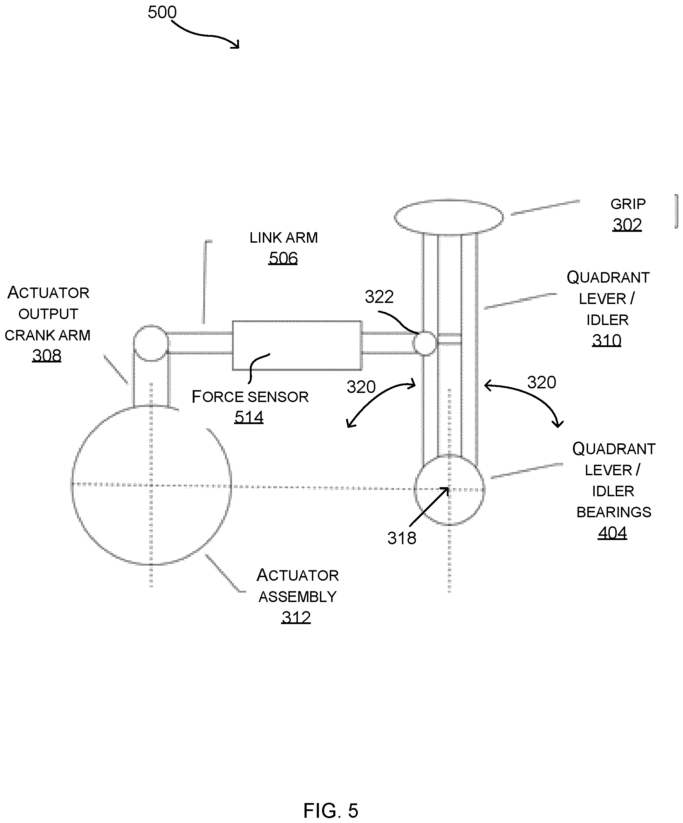

In the third arrangement 500 shown in Figure 5, the first pivot 318 is implemented using a bearing 404 (as in the second arrangement 400). Like the first and second arrangements 300, 400, the actuator assembly 312 (which corresponds to actuator 112 in Figure 1) is connected to the quadrant lever / idler 310 by means of a link arm 506. The link arm 506 connects, at a first end, to an actuator output crank arm 308, which is itself connected to the actuator assembly 312, and at a second end to the quadrant lever / idler 310 by means of a second pivot joint 322. In this third arrangement 500, a force sensor 514 is built into the link arm 506. In this position the force sensor 514 is a single axis tensile force sensor. As the force sensor 514 is integrated into the link arm 506, this reduces the part count (compared to having both a link arm and force sensor) and as a result simplifies manufacturing and may also reduce the overall weight of the assembly. In this third arrangement 500, the force sensor 514 is still placed close to the grip 302, with only one joint, the second pivot 322, between the grip 302 and the force sensor 514.

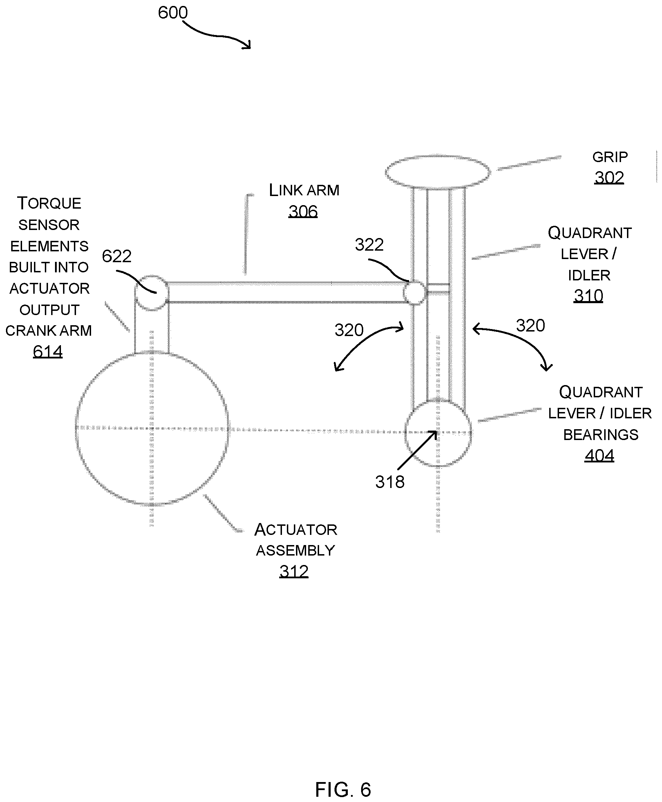

In the fourth arrangement 600 shown in Figure 6, the first pivot 318 is implemented using a bearing 404 (as in the second and third arrangements 400, 500). Like the first, second and third arrangements 300, 400, 500 the actuator assembly 312 (which corresponds to actuator 112 in Figure 1) is connected to the quadrant lever / idler 310 by means of a link arm 306. The link arm 306 connects, at a first end, to an actuator output crank arm 614, which is itself connected to the actuator assembly 312, and at a second end to the quadrant lever / idler 310 by means of a second pivot joint 322. In this fourth arrangement 600, a torque sensor is built into the actuator output crank arm 614 on the output face of the actuator assembly 312. As the torque sensor is integrated into the actuator output crank arm 614, this reduces the part count (compared to having both an actuator output crank arm and force/torque sensor) and as a result simplifies manufacturing and may also reduce the overall weight of the assembly. In this fourth arrangement 600, the force sensor is still placed close to the grip 302, with two joints (the second pivot 322 and the joint 622 between the link arm 306 and the actuator output crank arm 614) between the grip 302 and the torque sensor.

In the fifth arrangement 700 shown in Figure 7, the actuator output crank 708 acts as the quadrant lever (and corresponds to the lever 110 in Figure 1). A grip 302 is provided at a distal end of the actuator output crank 708. In use, a pilot applies force to the grip 302 (and hence to the actuator output crank 708) in order to rotate the actuator output crank 708 (as indicated by the double ended arrows 320) about the axis 718 of the actuator assembly to adjust the aircraft throttle. In this fifth arrangement 700, a force sensor 714 is positioned between the grip 302 and the actuator assembly 312. In this position the force sensor 714-detects the shear or bending load between the grip 302 and pivot 718 rather than the compression/tension acting along the axis of the actuator output crank. In this fifth arrangement 700 (like the second arrangement 400), the force sensor 714 is placed as close to the grip 302 as possible and there are no bearings or links between the grip 302 and the force sensor 714. This reduces the error in the sensed force and hence reduces the error in the force data that is output to both the quadrant control system 104 and the flight control system 106. Furthermore as the actuator output crank 708 acts as the quadrant lever, there is no need for a separate lever / idler arrangement (as in the examples shown in Figures 3-6), a link arm or additional pivots or joints. This reduces the part count (compared to conventional assemblies or any of the previously described examples) and as a result simplifies manufacturing and reduces the overall weight of the assembly.

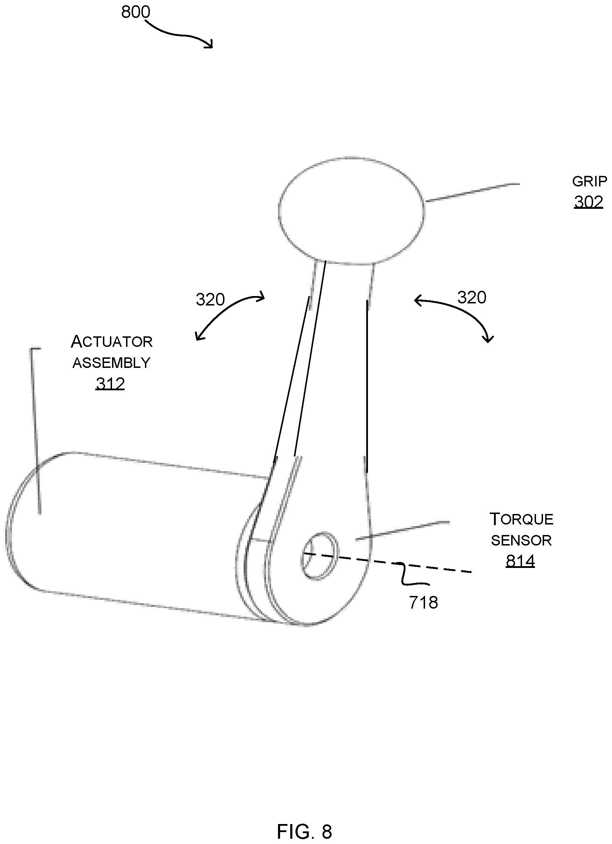

The sixth arrangement 800 shown in Figure 8, is variation on that shown in Figure 7 which uses a torque sensor 814 rather than a force sensor. In this example, the actuator output crank 708 is replaced by a torque sensor 814 that acts as the quadrant lever (and corresponds to the lever 110 in Figure 1). A grip 302 is provided at a distal end of the torque sensor 814. In use, a pilot applies force to the grip 302 (and hence to the torque sensor 814) in order to rotate the torque sensor 814 (as indicated by the double ended arrows 320) about the axis 718 of the actuator assembly to adjust the aircraft throttle. In this sixth arrangement 800, the torque sensor 814 is therefore positioned between the grip 302 and the actuator assembly 312. In this sixth arrangement 800 (like the second and fifth arrangements 400, 700), the torque sensor 814 is placed as close to the grip 302 as possible and there are no bearings or links between the grip 302 and the torque sensor 814. This reduces the error in the sensed force and hence reduces the error in the force data that is output to both the quadrant control system 104 and the flight control system 106. Furthermore, as the torque sensor 814 acts as the quadrant lever, there is no need for a separate lever / idler arrangement (as in the examples shown in Figures 3-6), a link arm, actuator output crank arm or additional pivots or joints. This reduces the part count (compared to conventional assemblies or any of the previously described examples) and as a result simplifies manufacturing and reduces the overall weight of the assembly.

The active throttle assembly arrangements shown in Figures 3-8 and described above all seek to place the force/torque sensor close to grip 302 in order to minimise the errors that are introduced (e.g. as a consequence of backlash / friction in joints or bearings) and improve the accuracy of the force data that is provided to both the quadrant control system 104 and the flight control system 106. In the arrangements, the force/torque sensor is either directly coupled to the lever (e.g. the first, second, fifth and sixth arrangements 300, 400, 700, 800) or in a separate arm (e.g. the third and fourth arrangements 500, 600). In the second, fifth and sixth arrangements 400, 700, 800, the force/torque sensor is positioned adjacent to the grip without any intervening joints or bearings. In these examples the force/torque sensor is also positioned between the grip 302 and the pivot 318, 718 about which the lever (i.e. the quadrant lever / idler 310, actuator output crank 708, or torque sensor 814) rotates. In all of the second to sixth arrangements 400, 500, 600, 700, 800, the force/torque sensor is positioned between the grip 302 and the actuator assembly 312. In the first, second and fifth arrangements 300, 400, 700 the force/torque sensor is attached to the lever (i.e. the quadrant lever / idler 310 or actuator output crank 708).

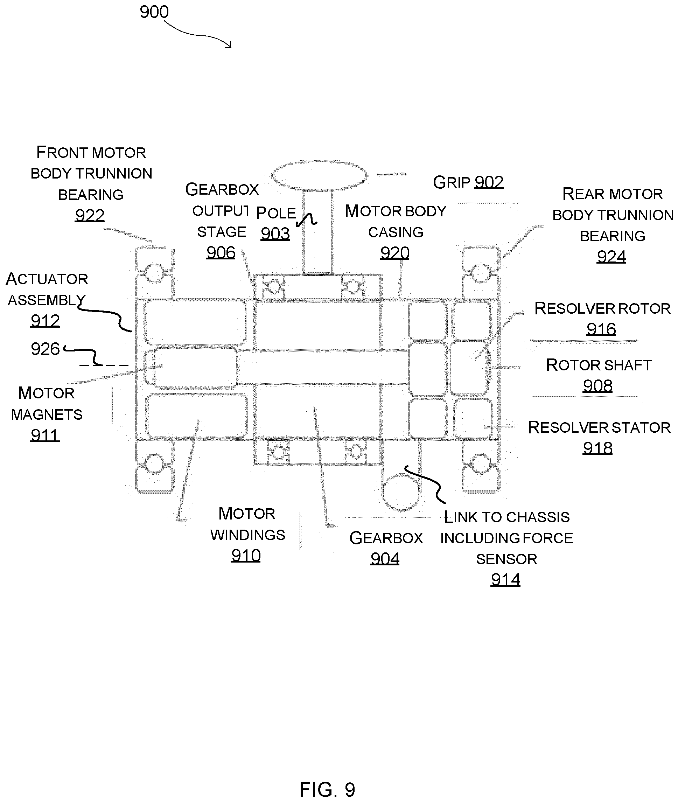

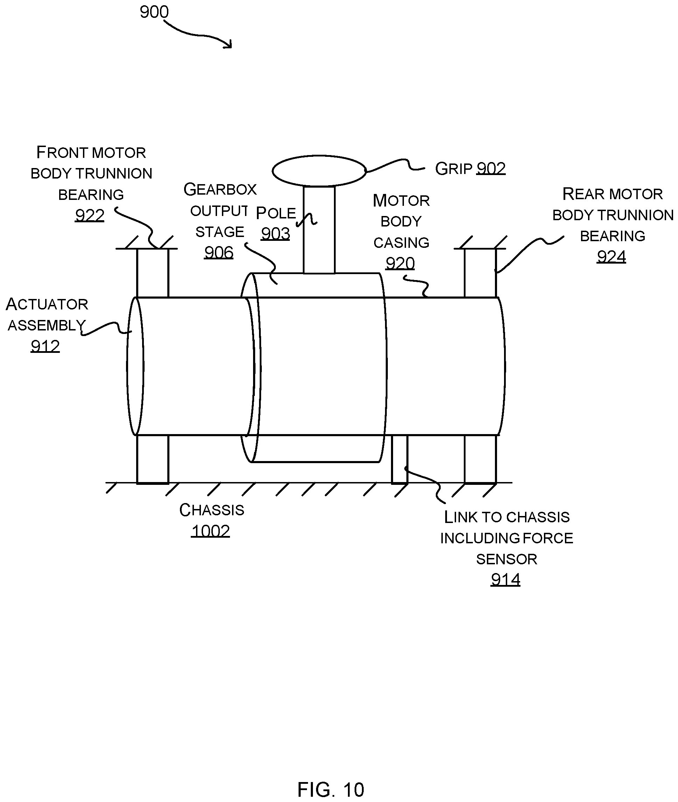

A further active throttle assembly arrangement 900 is shown in Figures 9 and 10. Figure 9 shows a cross-section through the centre of the actuator assembly 912 whereas Figure 10 shows a perspective view. The design of the actuator assembly 912 differs from that shown in the earlier examples, with the gearbox 904 (and hence the gearbox output stage 906) positioned approximately centrally along the length of the actuator assembly 912 (where the length is defined parallel to the rotor shaft 908). Figure 9 also shows the motor windings 910, motor magnets 911, resolver rotor 916, resolver stator 918 and motor body casing 920. As shown in Figure 9, the motor windings 910 and resolver area (comprising the resolver rotor 916 and resolver stator 918) are positioned either side of the gearbox 904. The lever, in the form of a pole 903 and grip 902, with the grip 902 positioned at the distal end of the pole 903, is connected, via the proximal end of the pole 903, to the gearbox output stage 906. The entire motor body casing 920 is trunnion mounted on two bearings 922, 924 to a chassis 1002 (not shown in Figure 9), with one bearing at each end of the motor body casing 920. The chassis 1002 may be part of the active throttle assembly arrangement 900 (e.g. where the active throttle assembly is a stand-alone unit). Alternatively the chassis 1002 may be part of the aircraft (e.g. part of the cockpit).

As the motor body casing 920 is trunnion mounted on the front and rear bearings 922, 924 it is free to rotate about an axis 926 through the centre of the actuator assembly and hence through the centre of the rotor shaft 908. The rotation is, however, limited by a link 914 that connects (and mechanically grounds the force path) the actuator assembly 912 to the chassis 1002. This link 914 includes a force sensor that, as a consequence of its position and the overall arrangement, detects the force applied by the pilot to the grip 902. In some examples, the link 914 may also function as an electrical bonding path and/or wiring may be clipped to the link 914.

The operation of the active throttle assembly arrangement 900 can be described for a situation where the actuator assembly is commanded to lock / hold position and hence the rotor shaft 908 cannot rotate about its axis. If the pilot moves the grip 902, the gearbox 904 cannot rotate (as it is held by the motor torque resisting movement via electro-magnetic hold) and so the rotational force is transferred to the motor body casing 902 and to the link to the chassis that includes the force sensor 914. Similarly, where the motor is not held in position, if the pilot applies a force which is counter to that of the motor, the resultant rotational force is transferred to the motor body casing 902 and to the link to the chassis that includes the force sensor 914. The force sensor within the link 914 is static and the motor body casing 920 only rotates by fractions of a degree within the trunnion bearings 922, 924 (i.e. within the backlash of the system and stiffness of the force sensor).

In this seventh active throttle assembly arrangement 900, shown in Figures 9 and 10, there are no dynamic force sensor cables since the force sensor is integrated within a fixed link 914 between the actuator assembly 912 and the chassis 1002. This improves reliability of the overall assembly.

Whilst the arrangement 900, shown in Figures 9 and 10, is described in the context of an active throttle arrangement, it may also be used for active sticks, cyclics or collectives, i.e. for controlling flight surfaces instead of aircraft engines. To provide multi-axis operation (e.g. for pitch and roll), the arrangement 900 may be mounted on a gimbal (e.g. with a torque sensor in the pivot joint, or force sensor on a crank arm).

In a further variation, the arrangement 900 may be modified to replace the pole 903 and grip 902 with a mechanical arrangement that links to existing linkage (e.g. throttle linkage) within an aircraft. In such an arrangement, the force sensor may be used to measure forces applied in the linkage rather than forces applied by a pilot. This may, for example, be used in aircraft which are not fly by wire in order to monitor their operation and/or provide backward compatibility.

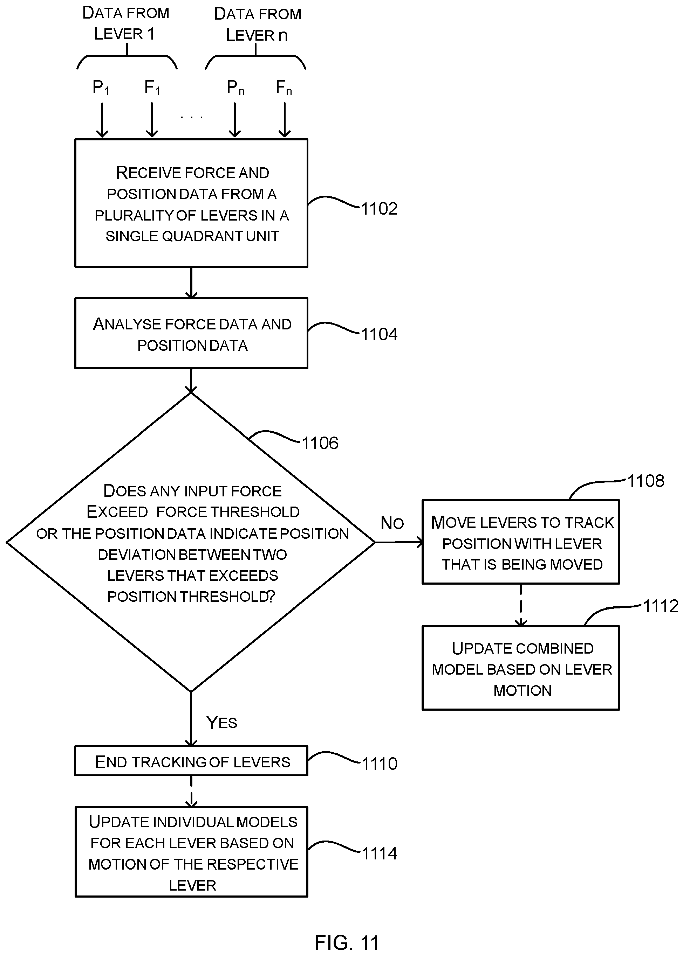

Figures 11-12 shows example methods of controlling a multi-quadrant active throttle assembly, such as the quadrant unit 102 shown in Figure 1. These methods may be implemented by the quadrant control system 104 shown in Figure 1. Multi-quadrant active throttle assemblies are typically used in aircraft with multiple engines (e.g. 2, 4 or 8 engine aircraft) with each lever (or quadrant) in the multi-quadrant active throttle assembly corresponding to (and hence controlling) a different engine. As the number of engines, and hence levers, increase it becomes increasingly difficult for a pilot to move them all together (i.e. so that the same force is applied to each lever and each lever is at the same angular position.

In order to prevent unstable and/or undesirable conditions, existing flight control systems accommodate this potential unintentional mismatch in force and/or position between levers by setting limits on the position and force data within which it is assumed that the values are the same. This has the effect of reducing the granularity, and hence accuracy, of the detected position and force. For example, if the position limit is half a degree, the precision of all input position data is effectively reduced to half a degree steps. A similar approach is adopted for the force data. As a consequence of this accommodation of unintentional mismatch in position data between levers, the actual position of the levers does not accurately reflect the actual throttle positions of the different engines. This means that the accuracy of the visual feedback provided to a pilot is also reduced. For example, where the levers are set at slightly different positions (but within the position limit of the system), the pilot might interpret this as the engines being set at different throttle positions, whereas the flight control system has assumed that they are in the same position (because the difference in positions is within the position limit) and so the engines are actually all set at the same throttle position.

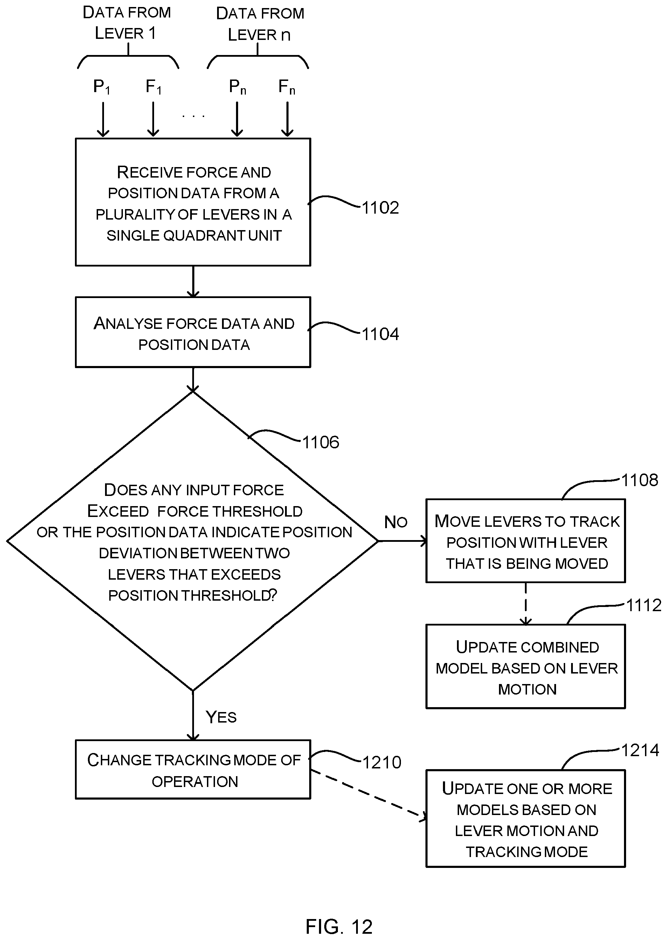

The control methods described herein improve the fidelity (e.g. control accuracy) of the system 100 and the visual feedback to the pilot because in a first mode of operation (which may be considered standard operating conditions), the pilot need only move one of the levers and all the other levers move in an identical manner, such that position data detected on those levers are the same. The lever that is moved by the pilot may be referred to as the primary lever and in the first mode of operation, all other levers move collectively to track the motion of the primary lever. The primary lever may be fixed (e.g. pre-defined in the system) or it may be any lever (e.g. whichever lever the pilot operates out of the plurality of levers). The method also enables a pilot to switch to a second mode of operation in which the collective motion of levers (also referred to the tracking of levers) is stopped (as in Figure 11) or changed (as in Figure 12) by applying a greater force to a lever (i.e. a force that exceeds a force threshold) and/or by moving the levers so that the position deviation between any pair of levers in the multi-quadrant active throttle assembly exceeds a position threshold.

The methods described herein (and shown in Figures 11-12) may be used in combination with any of the plurality of active throttle assembly arrangements described herein (e.g. where each active throttle assembly 108 in the multi-quadrant active throttle assembly is as described in one of the examples above) or may be used independently (e.g. with any other multi-quadrant active throttle assembly).

Figure 11 shows a first example of a method of controlling a multi-quadrant active throttle assembly, such as the quadrant unit 102 shown in Figure 1. As shown in Figure 11, the method receives, as inputs, position and force data, Pᵢ, Fj, corresponding to each of the levers in the multi-quadrant active throttle assembly (block 1102), where i is the index of the lever (or quadrant) and has values from one to n, where n is the number of levers in the multi-quadrant active throttle assembly). Referring back to Figure 1, the position and force data, Pᵢ, Fj, corresponding to a lever in the multi-quadrant active throttle assembly (which may also be referred to as being for the particular lever or from the particular lever) is the position and force data detected by the force and position sensor 114, 116 in the same active throttle assembly 108 as the particular lever 110.

The position and force data that is received (in block 1102) is analysed separately (block 1104), i.e. the force data is analysed independently of the position data. This analysis uses a force threshold and a position deviation threshold. The force data is analysed (in block 1104) to determine whether any input force, i.e. any force detected on any of the levers in the multi-quadrant active throttle assembly (so any Fᵢ), exceeds the force threshold. The position data is analysed (in block 1104) to determine whether the position deviation between any two levers in the multi-quadrant active throttle assembly exceeds the position threshold. The position threshold may be defined in terms of an angle (e.g. it may be set to a value of 5° or to a value in the range 5-10°) and this may be a system configurable parameter.

In response to determining that none of the forces received exceed the force threshold and that no pair of levers in the multi-quadrant active throttle assembly are separated in position by more than the position threshold ('No' in block 1106), the system operates in a first mode and all levers are moved collectively to track the one or more levers with changing force and/or position data (block 1108). The levers with changing force and position data are those which are being moved by the pilot and so the tracking (in block 1108) means that in this first mode of operation, if the pilot moves one (or more) levers, all the other levers move in an identical manner. The levers are moved by generating control data that is output to the multi-quadrant active throttle assembly and in particular, the control data provides control signals to cause the actuator assembly connected any lever that needs to move, to move.

In response to determining that any of the forces received exceed the force threshold and/or that any pair of levers in the multi-quadrant active throttle assembly are separated in position by more than the position threshold (`Yes' in block 1106), the system operates in a second mode and all levers operate independently such that there is no tracking (block 1110). are moved collectively to track the one or more levers with changing force and/or position data (block 1108). This means that if the pilot applies a large force that exceeds the force threshold to a lever or if the pilot gently (i.e. using a force below the force threshold) moves one or more levers so that the relative position of a pair of levers in the multi-quadrant active throttle assembly deviates by more than the position threshold, the method switches to the second mode.

The system that implements the method of Figure 11 (e.g. the quadrant control system 104 of Figure 1) may use a model to generate the control data that is provided to the multi-quadrant active throttle assembly to control the actuators and provide haptic feedback to the pilot. The model, which may be referred to as a haptic feedback model, defines how the lever should behave and hence may define the soft-stops, spring gradients, damping terms, etc. The model may also define the forces required to overcome any stops. As described above, the model may be updated (or otherwise modified) based on the control characteristics data received from the flight control system 106. There may be a model associated with each lever and used to generate the control signal for that lever and this may enable the model to take into consideration factors associated with the particular engine that the lever controls (e.g. where there are differences between engines, e.g. either intentionally as part of the aircraft design or as a result of manufacturing differences). Where the method of Figure 11 is used, an additional model is used that defines how the levers should behave collectively and hence may define the soft-stops, gradients, etc. that are used when operating in the first mode (i.e. when moving the levers in block 1108). When operating in the second mode (in block 1110), the individual models for each lever are instead used.

The models that are used may be static or may be dynamic, i.e. they may be updated during use. Where the models are dynamic, the method of figure 11 further comprises updating the combined model when in the first mode (block 1112) and updating the individual models when in the second mode (block 1114).

Figure 12 shows a second example of a method of controlling a multi-quadrant active throttle assembly, such as the quadrant unit 102 shown in Figure 1. The method of Figure 12 is a variation on that shown in Figure 11 and the majority of the method operates as described above; however, there is a difference in the operation in response to determining that any of the forces received exceed the force threshold and/or that any pair of levers in the multi-quadrant active throttle assembly are separated in position by more than the position threshold (`Yes' in block 1106). In the method of Figure 11, this triggers the end of any tracking of levers within the multi-quadrant active throttle assembly and the reverting back to independent operation of each lever (in block 1110), whereas in Figure 12 this instead results in a change in the tracking mode of operation (block 1210), i.e. instead of having a first mode in which all levers track and a second mode in which all levers are independent, there are a plurality of further operating modes that replace the second mode of the method Figure 11. In one of the further operating modes, all levers are independent (like the second mode of the method of Figure 11); however in other further operating modes, a subset of the levers track together and one or more other levers operate independently.

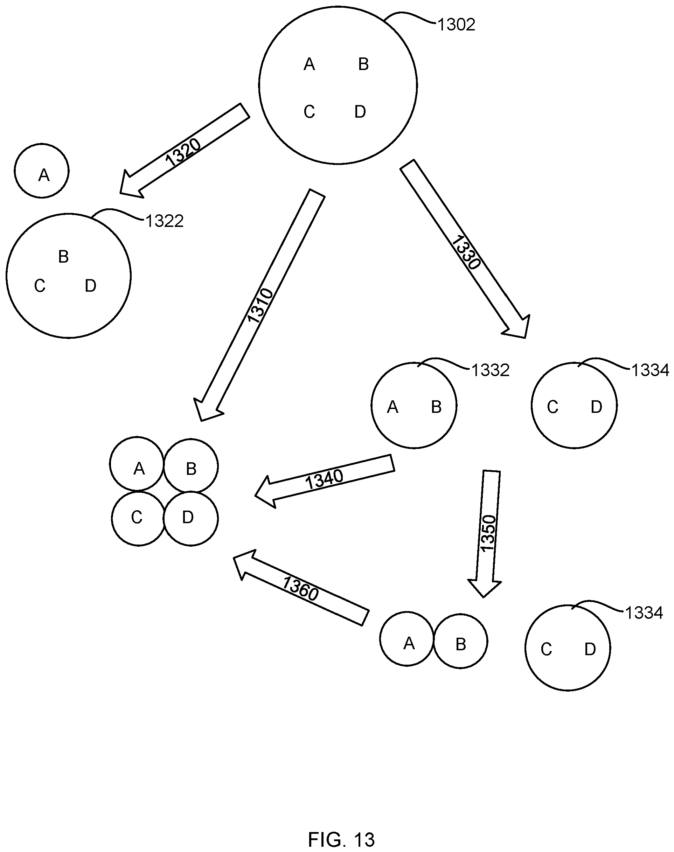

Examples of these further operating modes are shown graphically in Figure 13 and in various of these examples, the further operating mode divides the levers into two non-overlapping subsets of levers, wherein at least one of the subsets comprises more than one lever. Levers within a subset are then controlled collectively (i.e. such that they track together) but the two subsets are controlled independently (e.g. such that levers of the first subset do not track levers of the second subset). In other examples, there may be more than two non-overlapping subsets.

In Figure 13, each circle represents a group of levers (i.e. a subset of the levers) that are tracked together (e.g. as described above with reference to block 1108) and hence there is a model used by the quadrant control system 104 that corresponds to each group (and hence each circle in Figure 13). The letters within the circles in Figure 13 represent those levers that are part of the group and in the example shown the multi-quadrant active throttle assembly comprises four levers, labelled A-D. The central circle 1302 in Figure 13 therefore corresponds to the first mode of operation described above in which all levers are tracked. Arrow 1310 reflects the operation of Figure 11 as the system switches from tracking all levers together (circle 1302) to operating each lever independently in response to either threshold being exceeded.

Arrow 1320 in Figure 13 shows another example of a further operating mode in which, in response to either threshold being exceeded by data from one of the levers, lever A, that lever is removed from the group being tracked and operates independently; however the remaining levers (levers B-D) continue to be tracked (i.e. the operate in the same way as the first mode, but excluding the lever that triggered the exceeding of a threshold).

Arrow 1330 in Figure 13 shows another example of a further operating mode in which, in response to either threshold being exceeded by data from one of the levers, lever A, the levers are split into two subsets (as indicated by circles 1332, 1334) and whilst each subset operates independently of the other subset, levers within a subset are tracked together. These subsets may be predefined, e.g. based on aircraft configuration, or may be defined dynamically. These subsets may, for example, group levers corresponding to engines on the same wing (e.g. so that levers A and B correspond to engines on the left wing and levers C and D correspond to engines on the right wing) or to corresponding pairs of engines, one on each wing (e.g. so that levers A and B correspond to the engine closest to the fuselage on each wing and levers C and D correspond to the engine furthest from the fuselage on each wing).

It will be appreciated that whilst Figure 13 shows three further operating modes (corresponding to arrows 1310, 1320, 1330), a system may use any combination of two or more of these further operating modes and there may be one or more other further operating modes defined based on different combinations of the levers in the multi-quadrant active throttle assembly. Furthermore, whilst arrow 1330 shows a mode in which the levers are split into two subsets, in other examples the levers may be split into a different number of subsets.

Where the method of Figure 12 is used and as a result of a threshold being exceeded, the method switches from the first mode to one of the further operating modes in which some of the levers are still tracked together (e.g. further operating modes corresponding to arrows 1320 or 1330), a further change in operating mode may be subsequently triggered in response to a subsequent triggering event. This can also be described with reference to Figure 13. For example, if the first triggering event (i.e. the first time a threshold is exceeded resulting in a `Yes' in block 1106), the method switches from the first operating mode to a further operating mode 1330 in which the levers are split into two subsets, a second triggering event may result in switching to a further operating mode in which all levers operate independently (as indicated by arrow 1340) or in further subdivision of the subset containing the lever with the position / force data that caused a threshold to be exceeded (as indicated by arrow 1350 and assuming that lever A or B triggered the exceeding of a threshold). This reduction in the grouping, and hence the tracking of levers, may be repeated in response to further triggering events until all levers are operating independently (e.g. as indicated by arrow 1360 and assuming that lever A or D triggered the exceeding of a threshold).

Whilst the methods of Figures 11 and 12 are described above as comparing the position and force data to a force threshold and a position threshold, in other examples one or more different threshold may be used in addition or instead. For example, an acceleration threshold and/or a velocity threshold may be used. Where an acceleration threshold is used, the force data may be used to determine whether the threshold is exceeded and where a velocity threshold is used, the position data may be used to determine whether the threshold is exceeded. Furthermore, in systems where more than one threshold is used (e.g. force and position or acceleration and position [Are there any other likely combinations of thresholds that you would use?]), in the event of failure of one of the sensors (e.g. the position sensor or the force/torque sensor), the method may switch to only using the data from the remaining working sensor and the corresponding threshold (e.g. only the force threshold in the event that the position sensor has failed and only the position threshold in the event that the force sensor has failed).

Whilst Figures 11-12 do not show the operation switching back to the first mode of operation from the second mode of operation, this may be achieved via manual switch input (e.g. such that the method switches back to the first mode of operation in response to an input received from the manual switch) or in response to subsequently detecting (e.g. as part of the analysis in block 1104) that the position of all of the levers is within a second position threshold (i.e. that the position data indicates that the position deviation between any two of the levers does not exceed the second position threshold). This second position threshold is different from the position threshold described above (and used in block 1106) and the second position threshold will have a smaller value (i.e. correspond to a smaller angular deviation) than the position threshold described above. In some examples where a manual switch is used, the use of the manual switch may only be permitted (or its input may only be processed) where the position of all the levers is within a defined range.

As described above, the methods of controlling a multi-quadrant active throttle assembly as shown in Figures 11 and 12 may be implemented in the quadrant control system 104 in Figure 1. The methods may also be used where an aircraft comprises multiple, linked multi-quadrant active throttle assemblies, for example in system 200 shown in Figure 2.

The methods of controlling a multi-quadrant active throttle assembly as described above with reference to Figures 11-13 are independent of the flight control system 106 which receives the force and position data from the quadrant units 102. The tracking of levers, as a consequence of the control method, results in the sensing of identical positions and forces by the force/torque sensors 114 and position sensors 116 in the active throttle assemblies 108 of the levers that are being tracked and hence the provision of identical position and force data from all levers that are being tracked together to the flight control system 106.

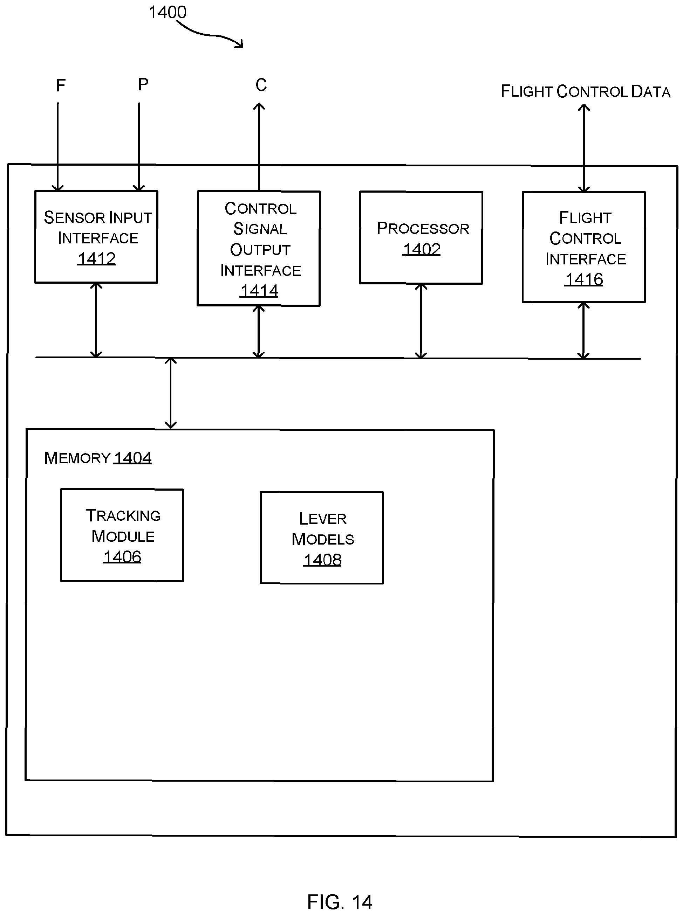

Figure 14 is a schematic diagram of a computing device 1400 that is configured to implement the methods of controlling a multi-quadrant active throttle assembly as shown in Figures 11 and 12 and hence may act as the quadrant control system 104 in Figure 1 or Figure 2.

The computing device 1400 comprises one or more processors 1402 and a memory 1404 arranged to store executable instructions that are executed by the processor 1402. The memory 1404 is arranged to store a tracking module 1406 that comprises instructions that, when executed by the processor 1402, cause the computing device 1400 to perform the method of Figure 11 or Figure 12. The memory 1404 may also store data that is used and/or updated by the tracking module 1406, such as the lever models 1408. As described above, these models, which may correspond to a single lever or a group of two or more levers, define how the control data is generated that operates the actuator assembly attached to the lever and provides haptic feedback.

As shown in Figure 14, the computing device 1400 also comprises a plurality of interfaces such as a sensor input interface 1412 that is configured to receive the force and position data from a quadrant unit 102, a control signal output interface 1414 that is configured to output control data to the quadrant unit 102 and a flight control interface 1416 that is configured to communicate with a flight control system 106.

In the example shown in Figure 14, the computing device 1400 comprises a flight control interface 1416. In other examples a single computing device may operate as both the flight control system 106 and the quadrant control system 104 and, in such examples, the flight control interface may be replaced by one or more interfaces that receive data from other sensors and systems in the aircraft and the memory 1404 may comprise a flight control system module.

## Claims

1. A method of controlling a multi-quadrant active throttle assembly (102), the method comprising:
receiving force and position data for a plurality of levers in the multi-quadrant active throttle assembly (1102);
analysing the force and position data to determine whether a threshold is exceeded (1104);
in response to determining that the threshold is not exceeded, operating in a first mode of operation in which the plurality of levers are controlled collectively (1108); and
in response to determining that the threshold is exceeded, operating in a different mode of operation in which the plurality of levers are not controlled collectively (1110).

2. The method according to claim 1, wherein analysing the force and position data to determine whether a threshold is exceeded comprises :
analysing the force and position data to determine whether any force data exceeds a force threshold and whether the position data indicates a position deviation between any two of the plurality of levers that exceeds a position threshold (1104);
wherein determining that the threshold is not exceeded comprises :
determining that none of the force data exceeds the force threshold and that the position data does not indicate a position deviation that exceeds the position threshold ;
and wherein determining that the threshold is exceeded comprises :
determining that any of the force data exceeds the force threshold or that the position data indicates a position deviation between two of the plurality of levers that exceeds the position threshold.

3. The method according to claim 1, wherein the threshold is an acceleration threshold or a velocity threshold.

4. The method according to any of the preceding claims, wherein operating in the first mode of operation comprises:
outputting control data to the multi-quadrant active throttle assembly, wherein the control data is configured to cause the plurality of levers to move to remain aligned.

5. The method according to claim 4, wherein operating in the first mode of operation comprises:
updating a combined model for the plurality of levers based on motion of the plurality of levers (1112), wherein the combined model is used to generate control data to provide haptic feedback via the plurality of levers.

6. The method according to any of the preceding claims, wherein the different mode of operation comprises a second mode of operation in which each the plurality of levers are controlled independently.

7. The method according to claim 6, wherein operating in the second mode of operation comprises:
outputting control data to the multi-quadrant active throttle assembly, the control data comprising independent control data for each of the plurality of levers.

8. The method according to claim 6 or 7, wherein operating in the second mode of operation comprises:
updating individual models for each of the plurality of levers based on motion of the respective lever (1114), wherein the model for a lever is used to generate control data to provide haptic feedback via the respective lever.

9. The method according to any of claims 1-5, wherein the different mode of operation comprises a third mode of operation in which a first subset of the plurality of levers are controlled independently of a second subset of the plurality of levers and within each subset, the levers are controlled collectively, wherein the first and second subsets do not overlap and the second subset (1322, 1334) comprises at least two levers.

10. The method according to claim 9, wherein operating in the third mode of operation comprises:
outputting control data to the multi-quadrant active throttle assembly, wherein the control data is configured to cause the levers in the second subset to move to remain aligned.

11. The method according to claim 9 or 10, wherein operating in the third mode of operation comprises:
updating a model for the first subset of levers based on motion of the plurality of levers in the first subset and updating a model for the second subset of levers based on motion of the plurality of levers in the second subset (1214), wherein the model for the first subset of levers is used to generate control data to provide haptic feedback via the first subset of levers and the model for the second subset of levers is used to generate control data to provide haptic feedback via the second subset of levers.

12. A control system (104) for a multi-quadrant active throttle assembly (102), the control system comprising :
an input interface (1412) configured to receive force and position data for a plurality of levers in the multi-quadrant active throttle assembly ;
an output interface (1414) configured to output control data to the multi-quadrant active throttle assembly ;
a processor (1402) ; and
a memory (1404) arranged to store computer executable instructions that, when executed cause the processor to:
analyse the force and position data to determine whether a threshold is exceeded (1104);
in response to determining the threshold is not exceeded, operate in a first mode of operation in which the plurality of levers are controlled collectively (1108); and
in response to determining that the threshold is exceeded, operate in a different mode of operation in which the plurality of levers are not controlled collectively (1110).

13. The control system according to claim 12, wherein analysing the force and position data to determine whether a threshold is exceeded comprises :
analysing the force and position data to determine whether any force data exceeds a force threshold and whether the position data indicates a position deviation between any two of the plurality of levers that exceeds a position threshold (1104);
wherein determining that the threshold is not exceeded comprises :
determining that none of the force data exceeds the force threshold and that the position data does not indicate a position deviation that exceeds the position threshold ;
and wherein determining that the threshold is exceeded comprises :
determining that any of the force data exceeds the force threshold or that the position data indicates a position deviation between two of the plurality of levers that exceeds the position threshold.

14. A computer program comprising instructions which, when the program is executed by a computer, cause the computer to carry out the method of any of claims 1-11.

15. A computer-readable medium having stored thereon the computer program of claim 14.
